# DEMANDE DE BREVET EUROPEEN

(11) **EP 2 192 436 A1**
(43) Date de publication de la demande: **02.06.2010**
(21) Numéro de dépôt: 08169997.7
(22) Date de dépôt: 26.11.2008
(51) Int. Cl.: G02F 1/1333, G02F 1/139, A44C 5/00, G06K 19/067

(54) **Dispositif d'affichage utilisant une cellule à cristaux liquides de type invité-hôte, qui comprend un cristal liquide nématique en hélice mélangé avec un colorant dichroïque**

(71) Demandeur: The Swatch Group Research and Development Ltd., 2074 Marin (CH)
(72) Inventeur: Blanckaert, Nicolas, 2017 Boudry (CH); Grupp, Joachim, 2073 Enges (CH); Barron, Cécile, 2000 Neuchâtel (CH); Grosjacques, Emile, 2072 Saint-Blaise (CH)
(74) Mandataire: Surmely, Gérard

(57) **Abrégé**

Dispositif d'affichage d'une information comprenant une cellule à cristal liquide (1) comportant un substrat avant (2) transparent et souple et un substrat arrière (4) également transparent ou non et souple, au moins une électrode (10) et une contre-électrode (12) correspondante étant structurées sur la face arrière (2a) du substrat avant (2) et sur la face avant (4a) du substrat arrière (4), les deux substrats avant et arrière (2,4) étant réunis et maintenus à distance constante l'un de l'autre par un cadre de scellement (6), ce cadre de scellement (6) délimitant un volume étanche (8) pour le confinement d'un cristal liquide (CL) de type nématique en hélice ou super-nématique en hélice, un colorant dichroïque (A) étant dissous dans le cristal liquide (CL), le dispositif d'affichage étant caractérisé en ce que la cellule à cristal liquide souple (1) est intégrée dans un support (18,20) également souple, tel qu'une montre-bracelet ou une carte bancaire.

## Description

La présente invention concerne un dispositif d'affichage comprenant une cellule d'affichage à cristaux liquides. Plus précisément, l'invention concerne un dispositif d'affichage comprenant une cellule d'affichage à cristaux liquides avec un colorant dichroïque dissous dans le cristal liquide.

Une cellule à cristal liquide comprend essentiellement un substrat avant transparent et un substrat arrière qui peut être également transparent ou non, ces deux substrats étant maintenus ensemble à distance constante l'un de l'autre par un cadre de scellement qui s'étend le long du périmètre desdits deux substrats. En plus de maintenir ensemble et parallèlement l'un à l'autre les deux substrats de la cellule, le cadre de scellement a pour autre fonction de définir un volume étanche pour le confinement du cristal liquide. Des électrodes et des contre-électrodes correspondantes sont structurées sur la face arrière du substrat avant et sur la face avant du substrat arrière. Par application d'une tension électrique entre une électrode et une contre-électrode sélectionnées, on modifie les propriétés optiques du cristal liquide au point de croisement des électrodes considérées.

Il est déjà connu de réaliser les substrats d'une cellule à cristal liquide au moyen d'un matériau plastique souple. La cellule à cristal liquide résultante peut alors être pliée pour pouvoir s'adapter au profil courbe d'un support rigide sur lequel elle va être fixée de manière permanente. Dans ce cas, les problèmes d'affichage liés à la perte des propriétés optiques du cristal liquide que l'on observe au moment où l'on plie la cellule disparaissent une fois que la cellule est fixée sur son support courbe rigide. On obtient ainsi une cellule à cristal liquide au profil courbe qui procure notamment des effets esthétiques intéressants.

Il faut néanmoins comprendre que les cellules à cristal liquide à substrats souples brièvement décrites ci-dessus ne sont destinées à être pliées qu'une seule fois lors de leur fixation sur le support rigide courbe. Après cette opération de montage initiale, les cellules à cristal liquide souples conservent leur profil courbé de manière définitive.

Au contraire, la présente invention vise une seconde catégorie de cellules à cristal liquide souples qui soient capables d'afficher des éléments d'information tout en pouvant être déformées de manière dynamique au gré de leur utilisation. De telles cellules souples peuvent se présenter par exemple sous la forme d'un bracelet souple destiné à être porté au poignet d'un utilisateur et indiquant l'heure. Elles peuvent aussi être incorporées dans l'épaisseur d'une carte souple par exemple du type carte de crédit.

Pour atteindre cet objectif, la présente invention procure un dispositif d'affichage d'une information comprenant une cellule à cristal liquide comportant un substrat avant transparent et souple et un substrat arrière également transparent ou non et souple, au moins une électrode et une contre-électrode correspondante étant structurées sur les faces en regard du substrat avant et du substrat arrière, les deux substrats avant et arrière étant réunis et maintenus à distance constante l'un de l'autre par un cadre de scellement, ce cadre de scellement délimitant un volume étanche pour le confinement d'un cristal liquide de type nématique en hélice ou super-nématique en hélice, un colorant dichroïque étant dissous dans le cristal liquide, le dispositif d'affichage étant **caractérisé en ce que** la cellule à cristal liquide souple est intégrée dans un support également souple.

Dans une cellule à cristal liquide par exemple de type nématique en hélice ordinaire, l'orientation au repos des molécules de cristal liquide est planaire, autrement dit le grand axe des molécules est parallèle aux substrats de la cellule. Pour pouvoir afficher des informations au moyen de la cellule, on utilise les propriétés optiques du cristal liquide vis-à-vis de la lumière. Plus précisément, dans les zones non commutées de la cellule, l'orientation des molécules de cristal liquide sera planaire et le vecteur lumineux va être tourné de 90°, tandis que dans les zones commutées de la cellule, l'orientation des molécules de cristal liquide sera homéotrope, de sorte que les molécules seront sans effet sur la direction de propagation de la lumière. Si les deux substrats de la cellule sont souples, on peut courber cette dernière. Sous l'effet de la flexion de la cellule, les molécules de cristal liquide vont, dans les zones non adressées de la cellule, tourner sur elles-mêmes de manière non contrôlable en sens horaire ou antihoraire dans des plans parallèles aux plans des substrats, ce qui va occasionner une dégradation du fond de l'affichage duquel se détachent les informations affichées. Ce problème ne sera pas aussi aigu dans les zones commutées de la cellule où le champ électrique maintient l'alignement homéotrope des molécules même si ces dernières se déplacent.

Le problème ci-dessus ne se rencontre pas dans le cas où l'on dissout dans le cristal liquide nématique en hélice un colorant dichroïque. En effet, les molécules du colorant qui s'orientent parallèlement aux molécules de cristal liquide ont la propriété de polariser la lumière en absorbant la composante du vecteur lumineux qui est parallèle à leur grand axe. Ainsi, lorsqu'on courbe la cellule, les molécules de cristal liquide vont, dans les zones non adressées de la cellule, tourner dans des plans parallèles aux plans des substrats en entraînant avec elles les molécules de colorant. L'effet absorbant des molécules de colorant va subsister dans la mesure où le grand axe des molécules de colorant reste parallèle aux plans des substrats. Ainsi, même lorsqu'on courbe la cellule, le fond de l'affichage ne va pas se dégrader. Comme, d'autre part, dans les zones adressées de la cellule, c'est-à-dire dans les zones dans lesquelles une tension est appliquée entre des électrodes et des contre-électrodes sélectionnées, les molécules de cristal liquide et donc les molécules de colorant vont adopter un alignement homéotrope et le conserver en raison de la présence du champ électrique même si elles se déplacent du fait de la flexion de la cellule, les informations affichées vont être conservées inchangées.

Le contraste est grandement amélioré si la cellule à cristal liquide est munie d'un filtre polarisant. Selon une première variante, un filtre polarisant est disposé sur la face avant du substrat avant et une couche réfléchissante est prévue sur la face arrière du substrat arrière. Selon une deuxième variante, on dispose successivement sur la face arrière du substrat arrière un filtre polarisant et une couche réfléchissante. Selon une troisième variante, on place sur la face arrière du substrat arrière un filtre polarisant réflectif. Selon une autre variante, la cellule souple est rétro-éclairée et l'on prévoit un polariseur simple, c'est-à-dire non réflectif, soit sur la face arrière du substrat arrière, soit sur la face avant du substrat avant. Selon une dernière variante, on prévoit de réaliser une couche réfléchissante sur la face avant du substrat arrière, mode de réalisation mieux connu sous son nom de réflecteur intégré, et l'on prévoit, le cas échéant, un polariseur sur la face avant du substrat avant.

Lorsque la cellule souple selon l'invention est à plat, les molécules de colorant adoptent la même orientation planaire que les molécules de cristal liquide et polarisent la lumière en absorbant la composante du vecteur lumineux qui est parallèle à leur grand axe. Si les directions de polarisation des molécules de colorant et du polariseur sont croisées, on observe une extinction totale de la lumière dans les zones où les molécules de cristal liquide sont alignées de manière planaire. On obtient donc un affichage en clair sur fond noir. Lorsque l'on courbe la cellule souple selon l'invention, les molécules de colorant vont tourner en même temps que les molécules de cristal liquide dans des plans parallèles aux plans des substrats. Leur effet polarisant va pratiquement disparaître, mais leur effet absorbant va lui subsister dans la mesure où le grand axe des molécules de colorant reste parallèle aux plans des substrats. Ainsi, en courbant la cellule, on passe d'une situation où pratiquement toute la lumière est absorbée à une situation où, dans le cas le plus défavorable, environ la moitié de la lumière est absorbée. Dans tous les cas, on conserve donc un fond homogène dont la couleur varie entre la couleur saturée du colorant dichroïque et la même couleur plus claire.

D'autres caractéristiques et avantages de la présente invention ressortiront plus clairement de la description détaillée qui suit d'un mode de réalisation du dispositif d'affichage selon l'invention, cet exemple étant donné à titre purement illustratif et non limitatif seulement en liaison avec le dessin annexé sur lequel :
- la figure 1 est une vue en coupe d'une cellule d'affichage à cristal liquide selon l'invention dans sa forme de réalisation simplifiée ;
- les figures 2A à 2C sont des vues analogues à celle de la figure 1, la cellule à cristaux liquides étant munie d'un polariseur pour l'amélioration du contraste d'affichage ;

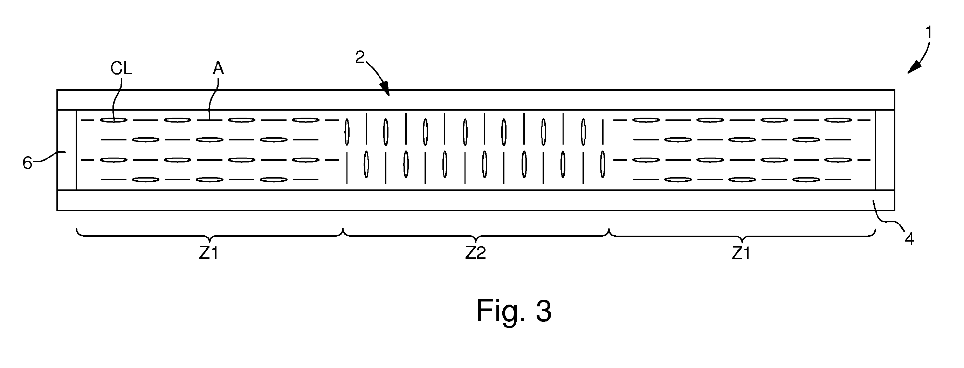

- la figure 3 est une vue analogue à celle de la figure 1 qui illustre l'alignement planaire et homéotrope des molécules de cristal liquide et de colorant dans les zones respectivement non commutées et commutées de la cellule ;
- la figure 4 illustre l'intégration d'une cellule souple à cristal liquide dans un bracelet également souple, et
- la figure 5 illustre l'intégration d'une cellule souple à cristal liquide dans un corps de carte également souple.

La présente invention procède de l'idée générale inventive qui consiste à procurer un dispositif d'affichage comprenant une cellule à cristaux liquides souple capable d'être déformée de manière dynamique au gré de son utilisation tout en conservant ses qualités d'affichage inchangées. A cet effet, la présente invention enseigne d'intégrer sur un substrat souple une cellule à cristaux liquides souple comprenant un cristal liquide de type nématique ou super-nématique en hélice dans lequel est dissous un colorant dichroïque. En effet, un tel colorant, dont les molécules s'alignent parallèlement aux molécules de cristal liquide, a la propriété de polariser la lumière en absorbant la composante du vecteur lumineux qui est parallèle au grand axe de ses molécules. Quand la cellule à cristaux liquides est à plat, l'orientation des molécules de cristal liquide et donc des molécules de colorant est planaire dans les zones non commutées de la cellule et homéotrope dans les zones commutées de cette dernière. Quand on déforme la cellule, les molécules de colorant tournent dans les zones non commutées de la cellule avec les molécules de cristal liquide dans des plans parallèles aux plans des substrats et perdent leur pouvoir de polarisation de la lumière. Par contre, elles conservent leur propriété d'absorption de la lumière. Par conséquent, le fond de l'affichage reste inchangé même quand la cellule à cristal liquide se déforme. Comme de plus dans les zones commutées de la cellule les molécules de cristal liquide et donc les molécules de colorant conservent leur alignement homéotrope sous l'effet du champ électrique même si elles bougent, l'affichage global de la cellule reste inchangé même si celle-ci se déforme au gré de son utilisation.

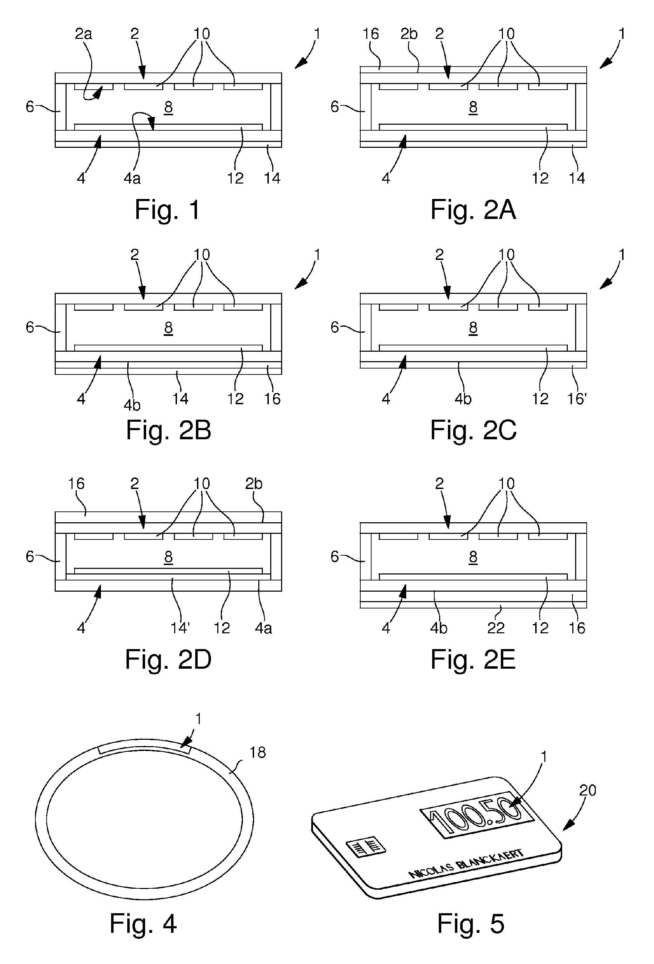

Dans son acception la plus simple, la cellule à cristal liquide selon l'invention, désignée dans son ensemble par la référence numérique générale 1, comprend (voir figure 1) un substrat avant 2 et un substrat arrière 4 tous deux réalisés dans un matériau souple et transparent tel qu'un matériau plastique ou un verre mince. Les deux substrats avant 2 et arrière 4 sont maintenus ensemble à distance l'un de l'autre par un cadre de scellement 6 qui définit également un volume 8 pour le confinement du cristal liquide CL et du colorant dichroïque A dissous dans le cristal liquide CL. Le cristal liquide CL est un cristal liquide nématique ou super-nématique en hélice. Une pluralité d'électrodes 10 et de contre-électrodes 12 sont respectivement structurées sur la face arrière 2a du substrat avant 2 et sur la face avant 4a du substrat arrière 4. Enfin, une couche réfléchissante 14 est disposée sur la face arrière 4b du substrat arrière 4. On peut également disposer une couche réfléchissante 14' sur la face avant 4a du substrat arrière 4 (réflecteur intégré). De même, la couche réfléchissante peut être remplacée par un dispositif de rétro-éclairage 22.

Pour améliorer le contraste de l'affichage, on associe habituellement à une cellule du genre ci-dessus un filtre polarisant 16. Ce filtre polarisant 16 peut être disposé sur la face avant 2b du substrat avant 2 de la cellule 1 (figure 2A) ou entre la face arrière 4b du substrat arrière 4 et la couche réfléchissante 14 (figure 2B). Le filtre polarisant peut aussi être un filtre polarisant réflectif 16' placé sur la face arrière 4b du substrat arrière 4 (figure 2C). Dans le cas où la couche réfléchissante 14' est disposée sur la face avant 4a du substrat arrière 4 (réflecteur intégré), le polariseur 16 doit être placé nécessairement sur la face avant 2b du substrat avant 2 (figure 2D). A la figure 2E, on voit que le polariseur 16 est disposé entre la face arrière 4b du substrat arrière 4 et le dispositif de rétro-éclairage 22.

Dans les zones Z1 non commutées de la cellule 1, l'alignement des molécules de cristal liquide et de colorant est planaire, tandis que dans les zones Z2 commutées de la cellule 1, l'alignement des molécules de cristal liquide et de colorant est homéotrope. Lorsque la cellule 1 selon l'invention est à plat, les molécules de cristal liquide font tourner la direction de polarisation de la lumière incidente et les molécules de colorant ont sur la lumière un effet polarisant en absorbant la composante du vecteur lumineux qui est parallèle à leur grand axe. En choisissant convenablement l'orientation du filtre polarisant 16, on peut donc obtenir une extinction complète de la lumière dans les zones non commutées de la cellule 1. Quand la cellule souple 1 se déforme au cours de son utilisation, les molécules de cristal liquide tournent dans des plans parallèles aux plans des substrats et entraînent les molécules de colorant qui perdent leurs propriétés de polarisation de la lumière. Néanmoins, comme les molécules de colorant restent parallèles aux plans des substrats, elles continuent d'absorber la lumière. On passe donc d'une situation dans laquelle pratiquement toute la lumière est absorbée et où le fond de l'affichage a une couleur saturée qui correspond à la couleur du colorant dichroïque à une situation dans laquelle, dans le cas le plus défavorable, environ la moitié de la lumière est absorbée et où le fond de l'affichage s'éclaircit. Le fond de l'affichage reste donc sensiblement inchangé quelles que soient les conditions d'utilisation de la cellule souple 1 selon l'invention. Comme d'autre part les molécules de cristal liquide et donc de colorant conservent leur alignement homéotrope dans les zones commutées sous l'effet du champ électrique même si elles se déplacent, les informations affichées sont conservées. Ainsi, la présente invention, en enseignant d'appliquer une cellule souple à cristal liquide dans lequel est dissous un colorant dichroïque à la réalisation d'un dispositif d'affichage procure un tel dispositif d'affichage destiné à rester souple et qui peut être déformé dynamiquement au gré de son utilisation quotidienne.

Deux exemples de réalisation du dispositif d'affichage selon l'invention sont représentés aux figures 4 et 5. A la figure 4, la cellule d'affichage souple 1 est incorporée dans un bracelet également souple 18 qui peut être enfilé autour du poignet. On peut également munir le bracelet de moyens de fermeture (non représentés) et l'enrouler autour du poignet. La cellule d'affichage 1 indique l'heure à la façon d'une montre-bracelet. Dans un autre exemple illustré à la figure 5, la cellule d'affichage souple 1 est incorporée dans un logement ménagé dans l'épaisseur d'une carte également souple 20 par exemple du type carte bancaire. Le fond du logement peut être utilisé comme surface réfléchissante pour la cellule 1. Outre le fait que l'on se soit aperçu qu'une cellule souple à cristal liquide dans lequel est dissous un colorant dichroïque conserve pratiquement inchangées ses caractéristiques d'affichage qu'elle soit à plat ou déformée de manière dynamique, une telle cellule s'est révélée une excellente candidate pour son intégration dans une carte bancaire. En effet, l'épaisseur typique d'une carte bancaire est de huit dixièmes de millimètre et les fabricants de telles cartes ont fixé à environ 400 micromètres l'épaisseur maximale des dispositifs qui pouvaient être intégrés dans de telles cartes. Or, du fait qu'une cellule d'affichage dichroïque du genre décrit ci-dessus ne nécessite qu'un seul polariseur permet de vérifier ce cahier des charges. Ainsi, une cellule à cristal liquide de type dichroïque présente une épaisseur totale parfaitement adaptée pour son intégration dans une carte bancaire.

## Revendications

1. Dispositif d'affichage d'une information comprenant une cellule à cristal liquide (1) comportant un substrat avant (2) transparent et souple et un substrat arrière (4) également transparent ou non et souple, au moins une électrode (10) et une contre-électrode (12) correspondante étant structurées sur la face arrière (2a) du substrat avant (2) et sur la face avant (4a) du substrat arrière (4), les deux substrats avant et arrière (2, 4) étant réunis et maintenus à distance constante l'un de l'autre par un cadre de scellement (6), ce cadre de scellement (6) délimitant un volume étanche (8) pour le confinement d'un cristal liquide (CL) de type nématique en hélice ou super-nématique en hélice, un colorant dichroïque (A) étant dissous dans le cristal liquide (CL), le dispositif d'affichage étant **caractérisé en ce que** la cellule à cristal liquide souple (1) est intégrée dans un support (18, 20) également souple.

2. Dispositif d'affichage selon la revendication 1, **caractérisé en ce qu'**une couche réfléchissante (14') est disposée sur la face avant (4a) du substrat arrière (4).

3. Dispositif d'affichage selon la revendication 1, **caractérisé en ce qu'**une couche réfléchissante (14) est disposée sur la face arrière (4b) du substrat arrière (4).

4. Dispositif selon la revendication 1, **caractérisé en ce qu'**un dispositif de rétro-éclairage est disposé sur la face arrière du substrat arrière.

5. Dispositif d'affichage selon l'une quelconque des revendications 1 à 4, **caractérisé en ce que** la cellule à cristal liquide comprend un filtre polarisant (16).

6. Dispositif d'affichage selon la revendication 5, **caractérisé en ce que** le filtre polarisant (16) est disposé sur la face avant (2b) du substrat avant (2) de la cellule (1).

7. Dispositif d'affichage selon la revendication 5 en ce qu'elle dépend de l'une quelconque des revendications 3 ou 4, **caractérisé en ce que** le filtre polarisant (16) est disposé entre la face arrière (4b) du substrat arrière (4) et la couche réfléchissante (14) ou le dispositif de rétro-éclairage.

8. Dispositif d'affichage selon la revendication 5, **caractérisé en ce que** le filtre polarisant est un filtre polarisant réflectif (16') placé sur la face arrière (4b) du substrat arrière (4).

9. Utilisation d'une cellule d'affichage souple dichroïque pour son intégration dans une carte souple (20) du type carte bancaire.

10. Utilisation d'une cellule d'affichage souple dichroïque pour la réalisation d'une pièce d'horlogerie sous la forme d'une bande (18) à enrouler ou à enfiler autour du poignet.
